## Europäisches Patentamt

## European Patent Office

## Office européen des brevets

(11) Veröffentlichungsnummer: **0 292 655**
A2

# EUROPÄISCHE PATENTANMELDUNG

(21) Anmeldenummer: 88103572.9

(22) Anmeldetag: 08.03.88

(51) Int. Cl.⁴: **B64D 35/00**

(30) Priorität: 26.05.87 DE 3717632

(43) Veröffentlichungstag der Anmeldung:
30.11.88 Patentblatt 88/48

(84) Benannte Vertragsstaaten:
DE FR GB IT

(71) Anmelder: **Dr.Ing.h.c. F. Porsche
Aktiengesellschaft
Porschestrasse 42
D-7000 Stuttgart 40(DE)**

(72) Erfinder: **Hawener, Jürgen, Dipl.-Ing.
Werner-Eck-Strasse 1
D-7141 Möglingen(DE)**

(54) **Antriebseinrichtung für ein Fahrzeug mit einem Propeller.**

(57) Es wird eine Antriebseinrichtung für ein Flugzeug mit einem Propeller, insbesondere mit einen im Rumpfheck einer Fluzeugzelle angeordnetem Schubpropeller beschrieben, der mit einer Antriebseinheit verbunden ist.

Die Antriebseinheit ist mit einem längseingebauten und eine Zentralwelle lagernd aufnehmenden Tragrohr verbunden. Das Tragrohr sowie die Antriebseinheit sind über mindestens drei elastische Lager zellenseitig abgestützt. Das eine Lager ist am flugzeughinteren Ende des Tragrohres und die beiden anderen Lager sind im Bereich der Antriebseinheit vorgesehen.

FIG.1

EP 0 292 655 A2

## Antriebseinrichtung für ein Fahrzeug mit einem Propeller

Die Erfindung bezieht sich auf eine Antriebseinrichtung nach dem Oberbegriff des Anspruchs 1.

Bei einem Flugzeug mit einem Propeller (DE-PS 730 493) ist zum Antrieb zwischen dem Propeller und einer an der Flugzeugzelle abgestützten Motorgetriebe-Einheit eine Zentralwelle angeordnet. Diese ist im Rumpfendteil der Flugzeugzelle starr gelagert, wobei eine weitere starre Rumpflagerung etwa mittig der Welle vorgesehen ist. Eine derartige Lagerung ist aufgrund der starren Verbindung mit der Flugzeugzelle insofern nachteilig, da keine körperschallisolierende Wirkung zur Zelle erfolgen kann. Desweiteren sind bei einer solchen Anordnung zur Welle zwischen dem Propeller und dem Betriebe Kardangelenke erforderlich, deren Dauerschwingungsbeanspruchung durch Relativbewegungen des Motors zur Propellerlagerung durch ein zwischengeschaltetes aufwendiges Verschiebeelement reduziert werden muß.

Der Erfindung liegt die Aufgabe zugrunde eine Antriebseinrichtung, im wesentlichen bestehend aus einer Motor-Getriebe-Einheit, einem Propeller und einer Welle zu schaffen, mit der eine Anordnung und Lagerung des Gesamtaggregats realisierbar ist, das ein günstiges Schwingungsverhalten aufweist. Desweiteren soll die gesamte Einheit in einfacher Weise bei Vermeidung aufwendiger Einstellarbeiten in die Flugzeugzelle montierbar sein.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß eine in sich geschlossene Antriebsaggregat-Einheit im wesentlichen bestehend aus einem Motor, einem Getriebe, einem Schubpropeller und einem Tragrohr mit innenliegender Zentralwelle in einfacher Weise in die Flugzeugzelle einbaubar ist. Die Lagerung dieses Gesamtaggregats erfolgt im Bereich des Rumpfheckteils über ein einziges elastisches Lager und im Bereich der Motor-Getriebe-Einheit über zwei weitere elastische Lager. Die Lager liegen vorzugsweise in schwingungsarmen Bereichen des Gesamtaggregats. Diese Lager sind zur Körperschallisolierung in Hoch-und Querrichtung elastisch ausgeführt und vorzugsweise in einer durch den Schwerpunkt verlaufenden Horizontalebene angeordnet. Desweiteren sind die Lager nahe der Propellerachse gelagert, damit die Biegebelastung des Tragrohres gering gehalten werden kann.

Die Welle ist gelenkfrei ausgebildet und bei einer relativ langen Ausführung des Tragrohres unterkritisch gelagert. Bei einer relativ kurzen Welle wird dagegen keine Zwischenlagerung der Zentralwelle erforderlich, so daß hier nur endseitige Lager vorzusehen sind.

Die Verwendung von Kunststoff und/oder einem Leichtmetall für das Tragrohr und für die Welle ergeben ein gewichtsmäßig leichtes Zentralrohraggregat, wobei beim Kunststoff durch gewählte Wickelwinkel der Fasern in dem Kunststoff in weiten Grenzen eine Dimensionierung entsprechend den auftretenden Belastungen möglich ist.

In der hohlen Zentralwelle ist zur Propellerverstellung eine Drucköleitung durchgeführt, die über Stützlager zur Welle gehalten wird, welche vorzugsweise in der Ebene der Wellenlager und daneben angeordnet sind und die die dünne und sehr lange Leitung abstützen und kritische Biegeschwingungen verhindern. Außerdem vermeiden die Stützlager eine zu starke Einschnürung der Zentralwelle beim Aufpressen der Zwischenlager.

Das Tragrohr kann auch nach einer weiteren Ausführung der Erfindung aus einem trichterförmig gestaltetem Getriebedeckel bestehen, der sich bis zum Schubpropeller erstreckt und in dem die Zentralwelle endseitig gelagert ist. Dieser Getriebedeckel kann ebenfalls aus einem Kunststoff bestehen.

Das im Rumpfheckteil vorgesehene Stützlager des Tragrohres kann gleichzeitig einen heckseitigen Abschluß für die stirnseitige Rumpföffnung bilden.

Das Gesamtaggregat ist bezüglich von Biege- und Torsionsschwingungen zur Erzielung einer bestmöglichen Laufruhe im Flugdrehzahlbereich durch entsprechend gewählte Massen- und Steifigkeitsverteilung abstimmbar. Dies wird durch eine geeignete Wahl der Durchmesser von der Zentralwelle und dem Tragrohr bzw. der Wandstärken erzielt, wobei auch die zwischen dem Motor und dem Propeller im Bereich des Getriebes vorgesehene verdrehweiche Gelenkscheibe beiträgt.

Ausführungsbeispiele der Erfindung sind in der Zeichnung dargestellt und werden im folgenden näher beschrieben.

Es zeigen:

Fig. 1 eine Seitenansicht des Gesamtaggregats, bestehend aus einer Motor-Getriebe-Einheit,einem Tragrohr, einer zwischengelagerten Zentralwelle und einem Propeller mit angedeutetem Flugzeugrumpf,

Fig. 2 eine weitere Ausführung eines Gesamtaggregats mit kurzem Tragrohr,

Fig. 3 eine weitere Ausführung mit einem das Tragrohr ersetzenden trichterförmigen Getriebedeckel,

Fig. 4 das flugzeughintere Ende des Tragrohres mit Propellerlager,

Fig. 5 das getriebeseitige Ende des Tragrohres mit Anbindung an einen Getriebedeckel,

Fig. 6 Anordnung der Wellenlager mit Stützlager für die Drucköllleitung,

Fig. 7 eine Ausführung eines am Getriebe gehaltenen Abschlußdeckels, der zur Aufnahme des Tragrohres ein hülsenförmiges Aufnahmeteil umfaßt,

Fig. 8 eine Ansicht von hinten im Prinzip auf ein zellenseitig gelagertes Antriebsaggregat und

Fig. 9 eine weitere Ausführung einer mit dem Tragrohr verbundenen Lagerhülse, die die Propeller-Lagerung aufnimmt.

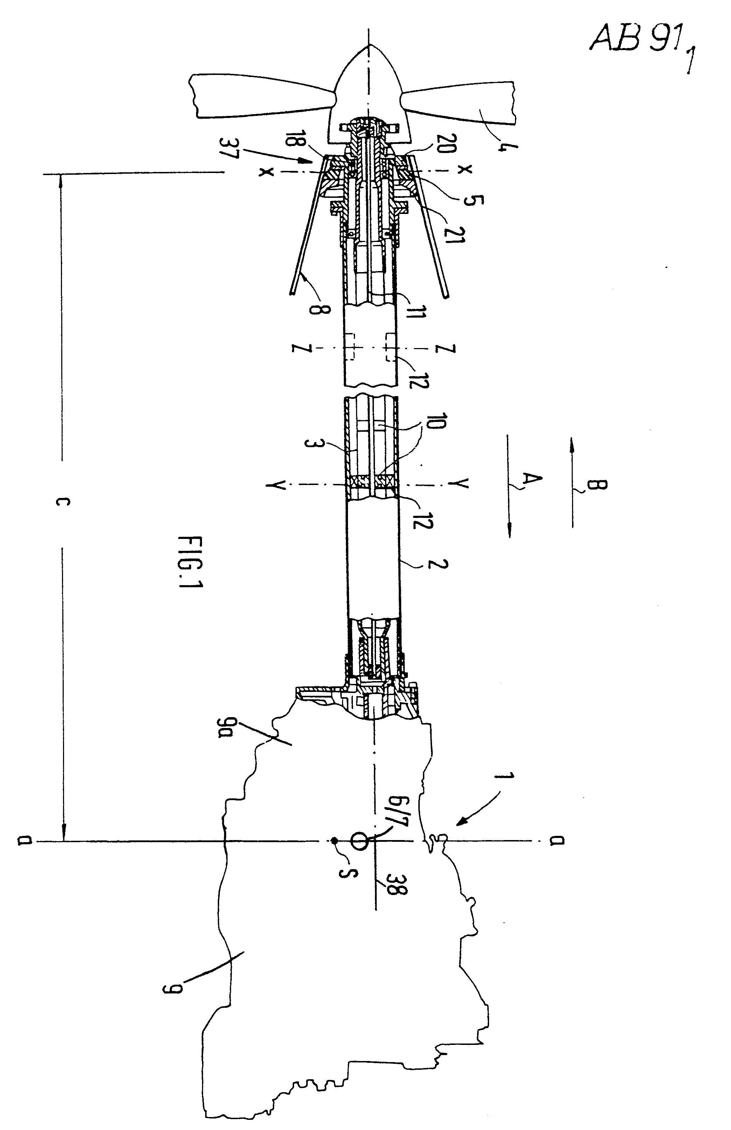

Wie Fig. 1 näher zeigt, ist mit einer Motor-Getriebe-Einheit 1 ein Längseingebautes Tragrohr 2 starr verbunden, durch das eine Zentralwelle 3 geführt und mit einem Schub- oder Zugpropeller 4 antriebsverbunden ist. Die Flugrichtung ist bei einem heckseitigen Schubpropeller in Pfeilrichtung A und bei einem bugseitigen Zugpropeller in Pfeilrichtung B.

Das Gesamtaggregat, im wesentlichen bestehend aus den Baugruppen 1, 2, 3 und 4 ist über drei Lager 5, 6 und 7 zum Rumpf 8 einer Flugzeugzelle hin abgestützt. Das eine Lager 5 ist am flugzeughinteren Ende 37 des Tragrohres 2 angeordnet und zum Rumpf 8 hin abgestützt, wobei die beiden weiteren Lager 6 und 7 im Bereich der Einheit 1 vorgesehen sind.

Das Lager 5 sowie die Lager 6 und 7 des Antriebsaggregats 9, 9a sind jeweils in - schwingungsarmen Bereichen, wie in den senkrechten Ebenen x-x und a-a angeordnet. Die Ebene a-a verläuft vorzugsweise durch den Schwerpunkt S des Gesamtaggregats. Die Lager 5 weisen zu den Lagern 6 und 7 eine relativ große Basis c auf. Insbesondere sind die Lager 6 und 7 nahe der Propellerachse 38 angeordnet.

Das Tragrohr 2 besteht aus einem glasfaserverstärkten Kunststoff, wobei die Zentralwelle 3 aus einem kohlenstoffaserverstärkten Kunststoff hergestellt ist.

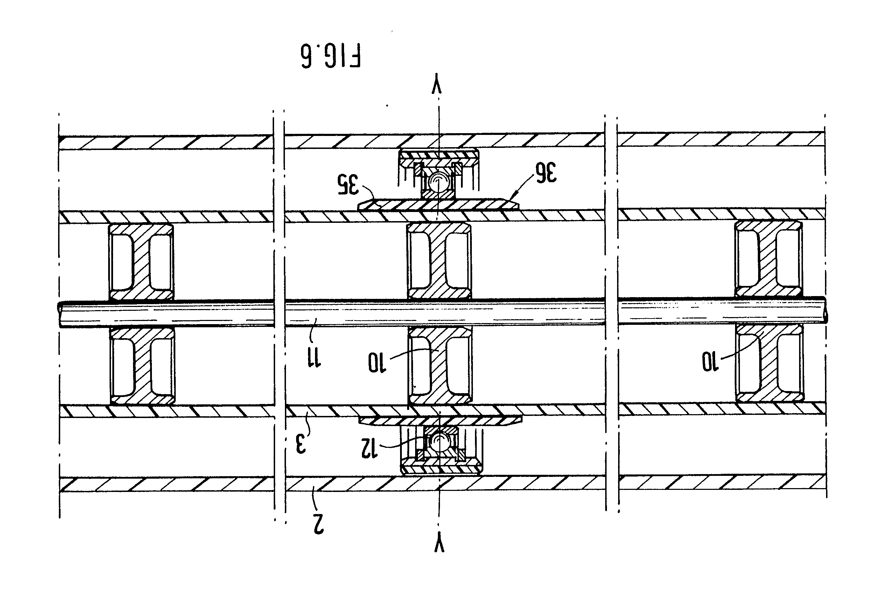

Die Zentralwelle 3 ist hohl ausgeführt und weist eine im Inneren über Stützlager 10 gehaltene Drucköllleitung 11 auf. Diese Stützlager 10 sind vorzugsweise in einer senkrechten Ebene Y-Y und Z-Z mit Lagern 12 der Zentralwelle 11 angeordnet. Desweiteren können weitere Stützlager 10 neben diesen Ebenen angeordnet sein, wie Fig. 6 näher zeigt.

Die Wellenlager 12 sind auf einem auf die Zentralwelle 3 aufgeschobenen Ring 35 angeordnet, der vorder- und rückseitig eine Abschrägung 36 aufweist. Dieser Ring 35 soll eine Ausbeulung der Zentralwelle 3 und Toleranzen zwischen Zentralrohr und Zentralwelle ausgleichen. Damit das Lager 12 bei einer Montage einfach auf diesen Ring 35 aufschiebbar ist, ist er mit der Abschrägung 36 versehen.

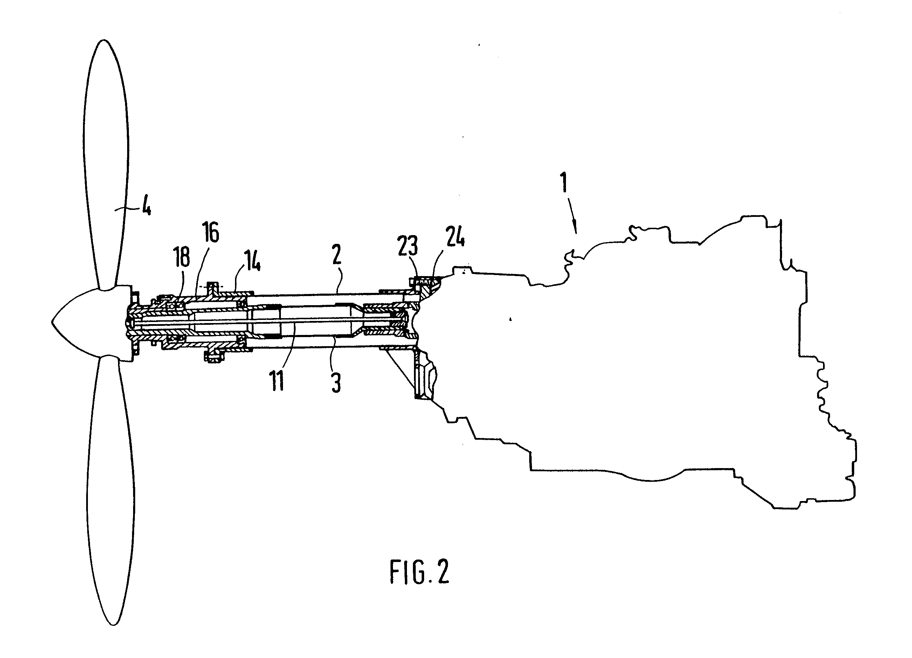

Bei einem relativ langen Tragrohr 2 nach Fig. 1, ist die Zentrawelle 3 z. B. mehrfach gelagert und zwar unterkritisch. In Fig. 2 ist ein relativ kurzes Tragrohr 2 gezeigt, das für die Zentralwelle 3 keine Zwischenlagerungen benötigt.

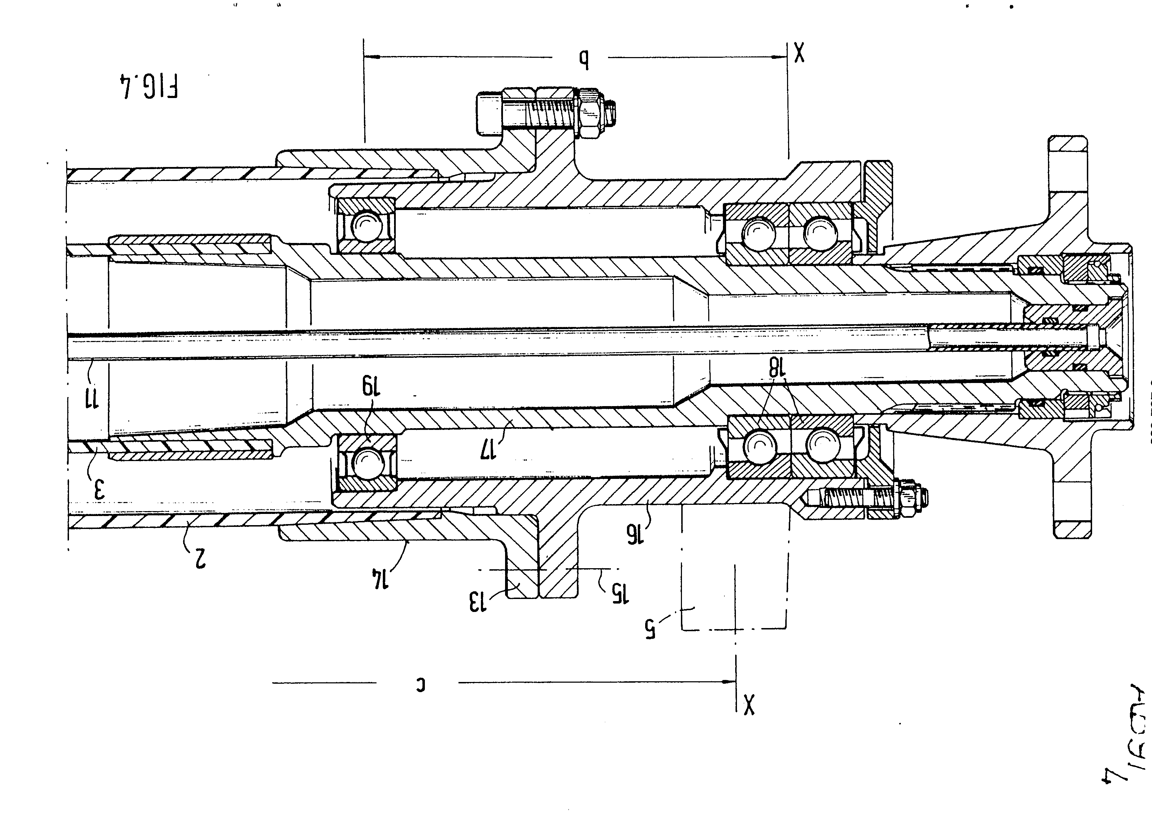

Gemäß Fig. 4 ist das Tragrohr 2 an seinem dem Propeller 4 zugewandten Ende mit einer einen Flansch 13 aufweisenden Hülse 14 verbunden, die über Schraubmittel 15 an einer äußeren Lagerhülse 16 befestigt ist. In dieser Lagerhülse 16 ist ein Verlängerungsteil 17 der Antriebswelle 3 über Lager 18, 19 abgestützt, die eine relativ große Basis b zur Lagerung des Propellers 4 bilden. Annähernd in einer senkrechten Ebene X-X mit dem Lager 18 ist das einzige hintere elastische Lager 5 für das Tragrohr 2 vorgesehen. Dieses elastische Lager 5 ist zwischen zwei Lagerelementen 20 und 21 angeordnet, wobei das eine Element 20 auf der Lagerhülse 16 und das andere Element 21 an einer Wand des Rumpfes 8 gehalten ist.

Das Lager 18 ist als Festlager ausgebildet, sodaß die Propeller-Axialkräfte unmittelbar in das Zentralrohr und in die Zelle eingeleitet werden. Dadurch wird sichergestellt, daß sowohl die CFK-Zentralwelle als auch das Getriebe frei von Propeller-Schubkräften sind.

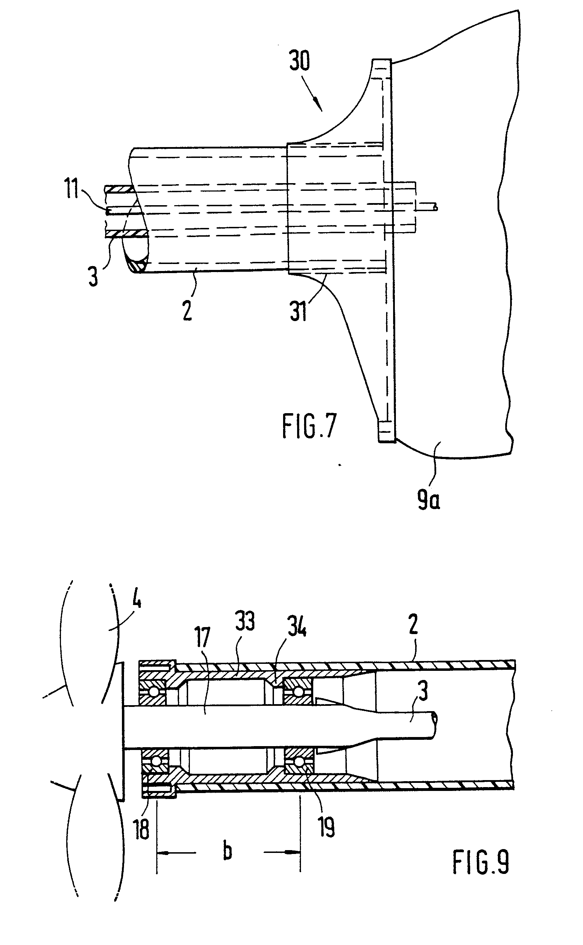

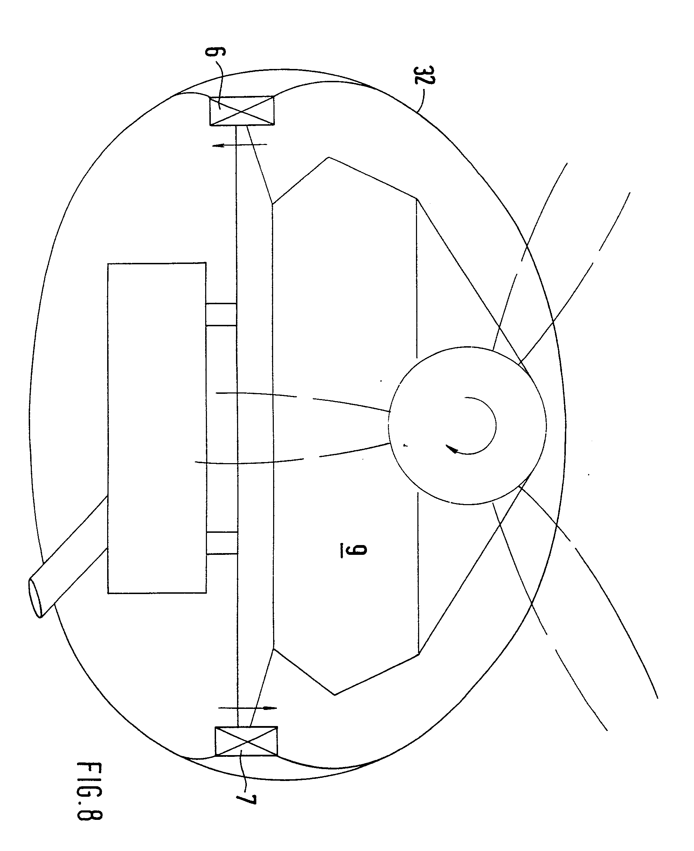

Nach einer weiteren Ausführung, gemäß Fig. 9, ist das Tragrohr 2 mit einer eingesteckten Lagerhülse 33 verbunden, die bei einer Ausführung aus Kunststoff eingeklebt ist. Innerhalb der Hülse 33 sind die Lager 18 und 19 angeordnet, welche über integrierte Abstützringe 34 in Axialrichtung gehalten sind.

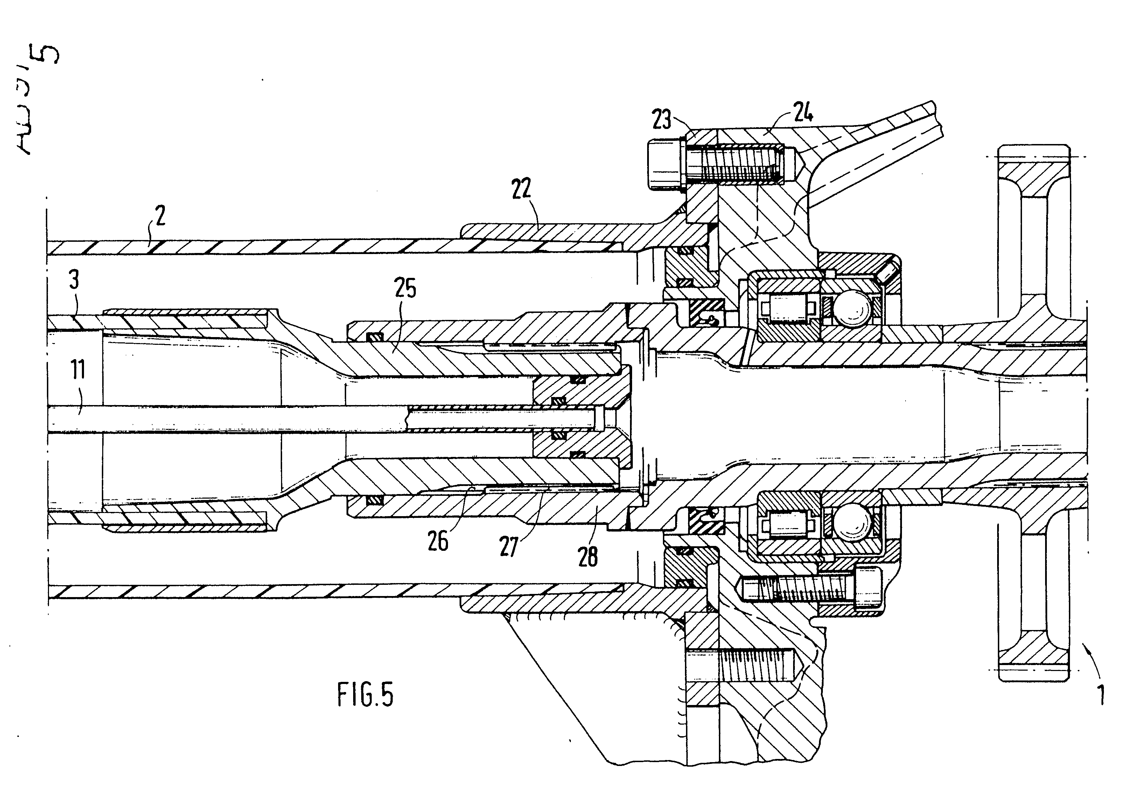

An dem dem Propeller 4 abgekehrten Ende des Tragrohres 2 (Fig. 5) ist dieses mit einem Hülsenelement 22 verbunden, das über einen Flansch 23 an einem Getriebedeckel 24 befestigt wird. Die Zentralwelle 3 ist an diesem Ende mit einer Reduzierhülse 25 versehen, die außenseitig eine Längsverzahnung 26 aufweist, die in Eingriff mit einer innenseitigen Längsverzahnung 27 einer Getriebeausgangswelle 28 steht. Diese Verzahnung dient zur Toleranzaufnahme und zur axialen Abkopplung in Verbindung mit der endseitigen Propeller-Lagerung.

Nach einer weiteren Ausführung gemäß Fig. 7 kann der Abschlußdeckel 30 des Getriebegehäuses so mit einem hülsenförmigen Aufnahmeteil 31 ausgebildet sein, daß in diesem das Tragrohr 2 mit seinem freien Ende gehalten ist. Bei einer Ausführung aus Kunststoff wird über ein bekanntes Wickelverfahren das Rohr 2 mit dem Deckel 30 verbunden. Innerhalb des Deckels 30 ist ein Kraftaufnahmeelement angeordnet.

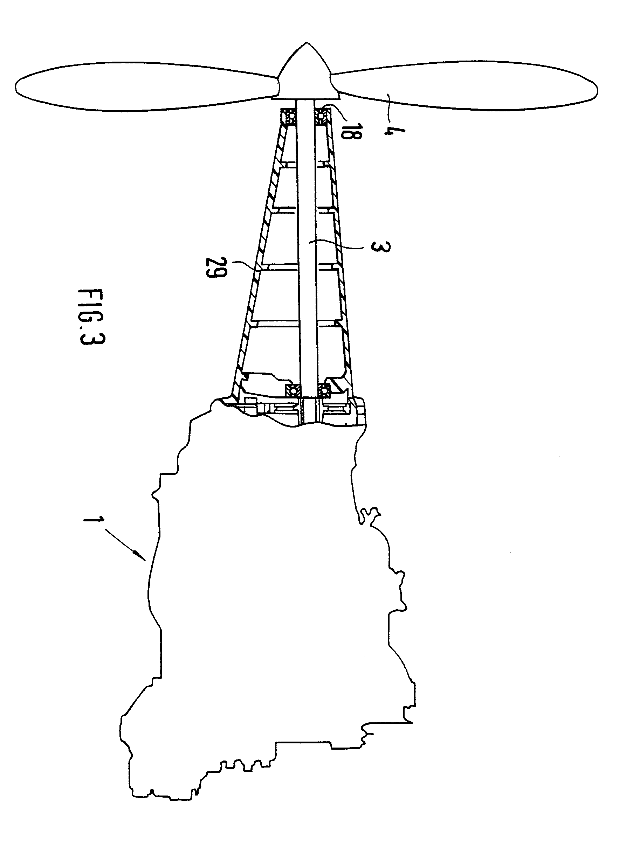

Gemäß einer weiteren Ausführungsform (Fig. 3) kann statt des zylindrischen Tragrohres 2 auch ein trichterförmig ausgebildeter Getriebedeckel 29 aus Kunststoff verwendet werden, der sich bis zum Schubpropeller 4 erstreckt und am Trichterende das Lager 18 aufweist. Um diesen Getriebedeckel erstreckt sich dann der Rumpf 8.

Zweckmäßigerweise sind die Motorlager 6 und 7 an einem Steifen Ort der Zellenwand 32 abgestützt, wobei die Lager seitlich des Motors 9 gehalten werden. Wie die Pfeile in Fig. 8 zeigen ist hierdurch eine Einleitung des im Betrieb auftretenden Drehmoments möglich.

**Ansprüche**

1. Antriebseinrichtung für ein Flugzeug mit einem Propeller, insbesondere mit einen im Rumpfheck einer Flugzeugzelle angeordneten Schubpropeller, der mit einer Antriebseinheit verbunden ist, dadurch gekennzeichnet, daß die Antriebseinheit (1) mit einem längseingebauten und eine Zentralwelle (3) lagernd aufnehmenden Tragrohr (2) verbunden ist und das Tragrohr (2) sowie die Antriebseinheit (1) über mindestens drei elastische Lager (5, 6 und 7) zellenseitig abgestützt sind, wobei das eine Lager (5) am flugzeughinteren Ende (37) des Tragrohres (2) und die beiden anderen Lager (6, 7) im Bereich der Antriebseinheit (1) vorgesehen sind.

2. Einrichtung nach Anspruch 1, dadurch gekennzeichnet, daß die Antriebseinheit (1) bestehend aus einem Motor (9) und einem Getriebe (9a) am Rumpfende ( ) angeordnet ist und zwischen dem Getriebe (9a) und dem Motor (9) das Tragrohr (2) angeordnet und mit den Einheiten (9 und 9a) verbunden ist.

3. Antriebseinheit nach den Ansprüchen 1 oder 2, dadurch gekennzeichnet, daß die Zentralwelle (3) in senkrechten Ebenen (Y-Y, Z-Z) des Gesamtaggregats (1, 2, 3) unterkritisch über Lager (12) im Tragrohr (2) gehalten ist.

4. Einrichtung nach den Ansprüchen 1, 2 oder 3, dadurch gekennzeichnet, daß das Tragrohr (2) aus einem glasfaserverstärkten Kunststoff besteht und in dem Rohr (2) die Zentralwelle (11) aus einem kohlenstoffaserverstärkten Kunststoff gelagert ist.

5. Einrichtung nach den Ansprüchen 1, 2, 3 oder 4, dadurch gekennzeichnet, daß die Zentralwelle (3) rohrförmig ausgebildet ist und eine Druckölleitung (11) aufnimmt, die in Stützlagern (10) des Tragrohres (2) resonanzfrei gehalten wird.

6. Einrichtung nach Anspruch 1, dadurch gekennzeichnet, daß das Tragrohr (2) mit seinem dem Getriebe (9a) zugewandten Ende mit einer aufgesteckten Hülse (22) verklebt und diese über Befestigungsmittel starr mit einem Getriebedeckel (24) der Einheit (1) verbunden ist.

7. Einrichtung nach den Ansprüchen 1 oder 4, dadurch gekennzeichnet, daß ein Abschlußdeckel (30) des Getriebegehäuses ein hülsenförmiges Aufnahmeteil (31) für das Tragrohr (2) umfaßt und das Aufnahmeteil (31) mit dem Tragrohr (2) nach einem an sich bekannten Wickelverfahren verbunden ist (Fig. 7) und im Abschlußdeckel (30) ein Krafteinleitungselement (30a) angeordnet ist.

8. Einrichtung nach einem oder mehreren der vorhergehenden Ansprüche, dadurch gekennzeichnet, daß ein Getriebedeckel (29) der Einheit (1) trichterförmig ausgeführt und innerhalb des Rumpfes (8) angeordnet ist und sich über die Gesamtlänge der Zentralwelle (3) erstreckt und am freien Ende (36) des Deckels (29) eine endseitige Aufnahme für ein Stützlager (18) des Propellers (4) aufweist (Fig. 3).

9. Einrichtung nach einem oder mehreren der vorhergehenden Ansprüche, dadurch gekennzeichnet, daß das dem Propeller (4) zugewandte flugzeughintere Ende des Tragrohres (2) zwischen zwei Lagerelementen (20, 21) angeordnete elastische Lager (5) aufweist, wobei das eine Element (20) mit dem Tragrohr (2) und das weitere Element (21) mit einer Wand des Rumpfes (8) verbunden ist.

10. Einrichtung nach einem oder mehreren der vorhergehenden Ansprüche, dadurch gekennzeichnet, daß das Gesamtaggregat (1, 2, 3) über eine relativ große Basis (c) in den Lagern (5, 6 und 7) körperschallisolierend mit weicher Kennung aufgehängt ist.

11. Einrichtung nach Anspruch 9, dadurch gekennzeichnet, daß die Lager (5, 6 und 7) in zwei vertikalen Querebenen (x-x und a-a) angeordnet sind und diese Querebenen in schwingungsarmen Bereichen des Aggregats liegen, wobei die Lager (6 und 7) des Motors (9) annähernd in der durch den Schwerpunkt (S) verlaufenden Querebene (a-a) und nahe der Achse (38) des Propellers (4) liegen.

12. Einrichtung nach einem oder mehreren der vorhergehenden Ansprüche, dadurch gekennzeichnet, daß die Motorlager (6 und 7) in einem steifen Bereich in einer Wand (32) der Flugzeugzelle angeordnet sind.

13. Einrichtung nach einem oder mehreren der vorhergehenden Ansprüche, dadurch gekennzeichnet, daß die Zentralwelle (3) eine Reduzierhülse (25) mit einer Außen-Längsverzahnung (26) aufweist, die längsverschiebbar im Eingriff mit einer Innen-Längsverzahnung (27) einer Getriebe-Ausgangswelle (28) steht.

14. Einrichtung nach einem oder mehreren der vorhegehenden Ansprüche, dadurch gekennzeichnet, daß das dem Propeller (4) zugewandte flugzeughintere Ende des Tragrohres (2) über eine Flanschhülse (14) mit einer äußeren Lagerhülse (16) starr verbunden ist und zwischen dieser Hülse (16) und einer mit der Zentralwelle (3) verbundenen inneren Getriebehülse (17), die die Stützlager (18, 19) umfassende Propeller-Lagerung mit relativ großer Lager-Basis (b) eingespannt ist.

15. Einrichtung nach Anspruch 14, dadurch gekennzeichnet, daß das Lager (18) als Festlager ausgeführt ist.

16. Einrichtung nach einem oder mehreren der vorhergehenden Anspüche, dadurch gekennzeichnet, daß das Tragrohr (2) mit einer eingesteckten Lagerhülse (33) klebend verbunden ist und die Hülse (33) die Stützlager (18, 19) trägt, welche in Axialrichtung über in die Hülse (33) integrierte Abstützringe (34) in Lage gehalten sind (Fig. 9).

AB 91₁

FIG.1

FIG.2

FIG.3

0 292 655

FIG.4

FIG.5

FIG.6

FIG.7

9a

FIG.9

ABY1 8

0 292 655

32

9

6

7

FIG.8